# EUROPÄISCHE PATENTSCHRIFT

(11) **EP 0 674 983 B1**
(45) Veröffentlichungstag und Bekanntmachung des Hinweises auf die Patenterteilung: **30.06.1999**
(21) Anmeldenummer: 95103857.9
(22) Anmeldetag: 16.03.1995
(51) Int. Cl.: B29B 9/06, B26D 7/24, F16P 3/08

(54) **Granuliervorrichtung für Strangmaterialien**
Granulator device for filamentary material
Dispositif de granulation pour matériau filiforme

(30) Priorität: 30.03.1994 DE 4411139
(43) Veröffentlichungstag der Anmeldung: 04.10.1995
(73) Patentinhaber: RIETER AUTOMATIK GmbH, D-63762 Grossostheim (DE)
(72) Erfinder: Pirrung, Walter, D-63762 Grossostheim (DE); Glaab, Berthold, D-63768 Hösbach (DE); Hohm, Laurenz, D-63762 Grossostheim (DE); Meidhof, Helmuth, D-63762 Grossostheim (DE); Wolf, Günther, D-63762 Grossostheim (DE)
(74) Vertreter: Bardehle, Heinz, Dipl.-Ing.

(56) Entgegenhaltungen:
- DE-C- 4 236 451
- GB-A- 2 271 741

## Beschreibung

Die Erfindung bezieht sich auf eine Granuliervorrichtung für Strangmaterialien mit einer Einzugsvorrichtung zur Erfassung des Strangmaterials und dessen Förderung zu einem Gegenmesser einer mit dem Gegenmesser zusammenwirkenden Messerwalze zum Zerschneiden des Strangmaterials zu Granulat und mit einer die Einzugsvorrichtung bildenden unteren und oberen Einzugswalze, von denen mindestens eine antreibbar ist, wobei die Walzen in zwei gegenüberliegenden Seitenwänden eines die Granuliervorrichtung einschließenden Gehäuses gelagert sind, das an seiner Frontseite wegklappbare Frontklappe aufweist.

Eine derartige Granuliervorrichtung ist in der DE-PS 42 36 451 beschrieben. Um bei der bekannten Granuliervorrichtung eine gute Zugänglichkeit der einzelnen Teile der Granuliervorrichtung zum Zwecke der Reinigung zu ermöglichen, ist im Gegensatz zum früher erforderlichen direkten Ausbau der unteren Einzugswalze aus ihrer Betriebsstellung die untere Einzugswalze zwischen einer Betriebs- und einer Außerbetriebsstellung bewegbar angeordnet, wozu eine eigene Handhabungsvorrichtung erforderlich ist. In der Außerbetriebsstellung der Einzugswalze gibt diese den Raum im Bereich des Gegenmessers und der Messerwalze weitgehend frei, so daß dieser Bereich, in dem sich unerwünschte Materialien besonders leicht ablagern, für eine Reinigung gut zugänglich ist. Das Verbleiben der unteren Einzugswalze in ihrer Außerbetriebsstellung, die sich in der Nähe der Betriebsstellung befindet, ist jedoch häufig für eine gründliche Reinigung hinderlich.

Der Erfindung liegt die Aufgabe zugrunde, die Zugänglichkeit des Innenraums des Gehäuses der Granuliervorrichtung weiterhin zu verbessern, was z.B. für die Durchführung von Reinigungsarbeiten, Wartung und Reparatur von Bedeutung ist. Erfindungsgemäß geschieht dies dadurch, daß die beiden Seitenwände jeweils ein sich in Richtung zur Frontklappe öffnendes Langloch zur Führung von Lagern der unteren Einzugswalze aufweisen, dessen Ende eine die Betriebsstellung der unteren Einzugswalze definierende Arretierung bildet, wobei die Frontklappe in ihrer im Betrieb geschlossenen Lage über ein Stützteil die Lager der unteren Einzugswalze gegen die Arretierung drückt.

Aufgrund der Anordnung der Lager der unteren Einzugswalze in dem Langloch ergibt sich die Möglichkeit, die untere Einzugswalze für den Reinigungsfall mit ihren Lagern aus der vom Ende des Langloch definierten Arretierung herauszuziehen, wodurch die untere Einzugswalze sofort aus den Bereich der anderen Walzen herausgelöst wird. Die somit freigewordene untere Einzugswalze kann dann aus dem Langloch, das sich in Richtung zur Frontklappe öffnet. problemlos herausgenommen werden. wozu die Fontklappe weggeklappt wird. Der Innenraum des Gehäuses, in dem lediglich die obere Einzugswalze, das Gegenmesser und die Messerwalze verblieben sind, ist dann leicht zugänglich und kann in allen seinen Bereichen gut gereinigt werden. Das gleiche gilt für gegebenenfalls durchzuführende Wartungsarbeiten.

Zweckmäßig gestaltet man die Frontklappe so, daß sie zusammen mit einem die Frontseite der Granuliervorrichtung teilweise übergreifenden Deckel den Abschluß der Frontseite bildet und mittels einer an den Deckel angelenkten Zugvorrichtung gegen die Stirnseiten der Seitenwände andrückbar ist. Unter der Wirkung der Zugvorrichtung wird dabei die Frontklappe zusammen mit dem Deckel gegen das Gehäuse und insbesondere gegen die Stirnseiten der Seitenwände gedrückt, womit gleichzeitig die Lager der unteren Einzugswalze in ihrer Arretierung gehalten werden.

Die Langlöcher ordnet man zweckmäßig im wesentlichen in horizontaler Richtung an. In diesem Falle erfordert das Herausziehen und das Ein-schieben der Lager der unteren Einzugswalze nur einen geringen Kraftaufwand. da hierbei die Schwerkraft nicht überwunden werden muß. Dies ist insbesondere beim Einschieben der Lager in die Langlöcher von Vorteil. da hierbei nur ein sanfter Druck auf die Lager ausgeübt werden muß. bis die Arretierung erreicht ist. Auf diesem Wege sind gegebenenfalls üblicherweise verwendete Antriebszahnräder in Eingriff zu bringen, die. wenn unter dem Einfluß der Schwerkraft die untere Einzugswalze eingerückt werden würde, bei unsanfter Handhabung unter Umständen beschädigt werden könnten.

In den Figuren ist ein Ausführungsbeispiel der Erfindung dargestellt. Es zeigen:
- Figur 1: die Prinzipdarstellung einer Granuliervorrichtung in Draufsicht ohne Deckel und ohne obere Einzugswalze,
- Figur 2: die Seitensicht der Granuliervorrichtung gemäß Figur 1 mit dem Langloch in einer der Seitenwände, und zwar in der Betriebslage,
- Figur 3: die gleiche Anordnung in der Außerbetriebslage,
- Figur 4: eine Frontansicht der Granuliervorrichtung

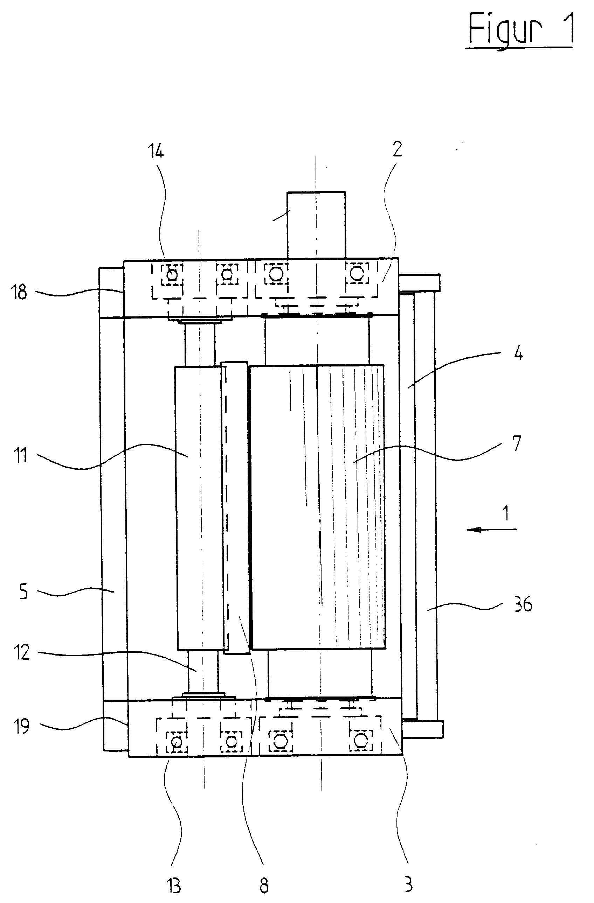

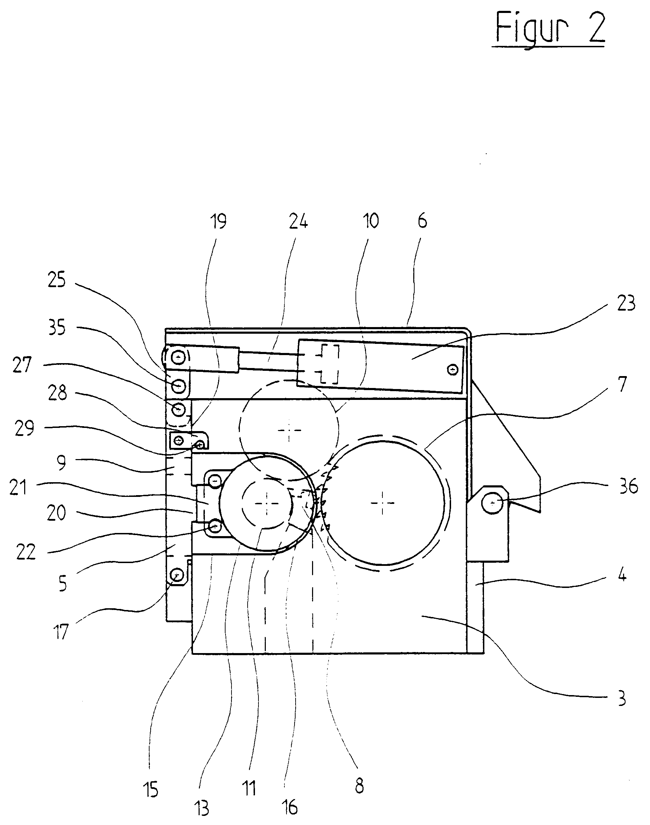

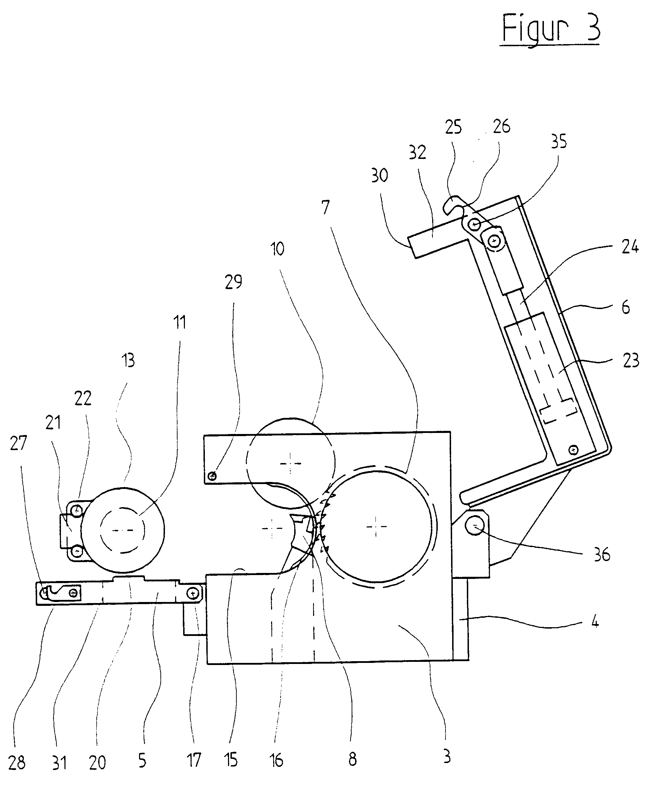

Figur 1 zeigt in prinzipieller Darstellungsweise eine Granuliervorrichtung, die ein Gehäuse 1 aufweist, von dem die beiden Seitenwände 2 und 3, die Rückwand 4 und die Frontklappe 5 dargestellt sind. Um die zwischen den beiden Seitenwänden 2 und 3 untergebrachten Teile der Granuliervorrichtung deutlich zeigen zu können, sind der in der Figur 2 gezeichnete Deckel 6 und die obere Einzugswalze 10 in Figur 1 weggelassen. Zwischen den beiden Seitenwänden 2 und 3 ist die Messerwalze 7 in üblicher Weise gelagert, die mit dem Gegenmesser 8 zusammenwirkt, über das der Granuliervorrichtung zugeführte Stränge (nicht dargestellt) geleitet werden. Zwischen der Umhüllenden der Messerwalze 7 und dem Gegenmesser 8 besteht nur ein wenige 1/100 mm breiter Spalt, um einen sauberen Schnitt zu gewährleisten. Dieser ist in der Figur 1 aus Gründen der Übersichtlichkeit der Darstellung vergrößert gezeichnet. Die Zuführung der Stränge erfolgt durch einen in der Figur 2 eingezeichneten Schlitz 9 (gebildet durch die in Figur 3 bezeichneten Stirn-seiten 30 und 31 des Deckels 6 und der Frontklappe 5), von wo aus die Stränge in eine Einzugsvorrichtung gelangen. die aus der obere Einzugswalze 10 und der unteren Einzugswalze 11 besteht. Wie aus Figur 2 ersichtlich, weisen die Umfänge der Einzugswalzen 10 und 11 einen geringen Abstand voneinander auf. der in bekannter Weise zur klemmenden Erfassung der zugeführten Stränge dient. Sowohl die obere Einzugswalze 10 als auch die untere Einzugswalze 11 ist in den Seitenwänden 2 und 3 gelagert.

Die untere Einzugswalze 11 sitzt mit ihrer Achse 12 in den Lagern 13 und 14, die als kreisrunde Scheiben ausgebildet sind. Die Lager 13 und 14 (siehe auch Figur 1) sind verschiebbar in Langlöchern in den Seitenwänden 2 und 3 angeordnet, von denen wegen der Seitensicht gemaß Figur 2 nur das Langloch 15 in der Seitenwand 3 gezeichnet ist. Das Langloch 15 (und das entsprechende in der Seitenwand 2 angeordnete Langloch) läuft an seinem inneren Ende 16 in einer Rundung aus, die in der dargestellten Betriebslage das Lager 13 (und entsprechend das Lager 14 in der Seitenwand 2) satt umschließt, so daß die Rundung 16 eine Arretierung für die Lager 13 und 14 bildet.

In der in Figur 2 dargestellten Betriebslage werden die Lager 13 und 14 in ihre Arretierung gedrückt, und zwar mittels der Frontklappe 5, die die Seitenwände 2 und 3 verbindet und gegenüber diesen wegklappbar angeordnet ist. Hierzu dient die in den beiden Seitenwänden 2 und 3 gelagerte Drehachse 17. In der daragestellten Betriebslage legt sich die Frontklappe 5 an die Stirnseiten 18 und 19 der beiden Seitenwände 2 und 3 an. Sie drückt dabei mittels ihres Vorsprungs 20 gegen das Stützteil 21. das mittels des Stiftes 22 an dem Lager 13 bzw. 14 mit Spiel befestigt ist. Die Verbindung vom Stift 22 zu dem Lager 13 bzw. 14 erfolgt dabei im Innenraum zwischen den beiden Seitenwänden 2 und 3 jeweils mittels einer nicht dargestellten Platte, die im Umfang etwa der unteren Einzugswalze 10 entspricht und von innen her teilweise die Langlöcher 15 abdeckt und mit dem Lager 13 bzw. 14 in fester Verbindung steht. Bei geschlossener Frontklappe wird also das Lager 12 bzw. 13 und damit die untere Einzugswalze 11 in ihre Arretierung gedrückt bzw. in der Betriebslage gehalten.

Die Frontklappe 5 wird mittels der Kolbenzylindereinheit 23 pneumatisch gegen die Stirnseiten 18 und 19 der beiden Seitenwände 2 und 3 drückt. Die Kolbenzylindereinheit 23 ist auf ihrer einen Seite an den Deckel 6 angelenkt. Mit ihrer anderen Seite ist sie über die Kolbenstange 24 an dem Hebel 25 befestigt, der über eine Mittelachse 35 schwenkbar auf dem Deckel 6 gelagert ist. Der Hebel 25 greift mit einer Ausnehmung 26 über einen an der Frontklappe 5 befestigten Stift 27, so daß ein auf die Kolbenstange 24 ausgeübter Druck sich über den Hebel 25 und den Stift 27 auf die Frontklappe überträgt und diese somit an die Stirnseiten 18 und 19 der beiden Seitenwände 2 und 3 andrückt. Dabei wird, wie vorstehend dargelegt, gleichzeitig das Lager 13 bzw. 14 in seine jeweilige Arretierung gedrückt.

In der Figur 3 ist die Anordnung gemäß Figur 2 in geöffnetem Zustand, also in der Außerbetriebslage, dargestellt. Der Deckel 6 ist durch Drehen um die Achse 36 geöffnet und die Frontklappe 5 weggeklappt, wozu durch Einfahren der Kolbenstange 24 die Verbindung zwischen der Ausnehmung 26 und dem Stift 27 gelöst ist. In dieser Lage können die Lager 13 und 14 der unteren Einzugswalze aus den Langlöchern 15 herausgeschoben werden. bis die Langlöcher 15 die Lager 13 und 14 freigeben. so daß die untere Einzugswalze 11 mit den an ihr befestigten Teilen. insbesondere dem Stützteil 21, abgenommen werden kann. In dieser Position der Granuliervorrichtung ist der Innenraum für Reinigung und Wartung frei zugänglich.

Um die Vorrichtung wieder in die in der Figur 2 dargestellte Betriebslage zu bringen, wird die Frontklappe 5 von Hand gegen die Stirnsteiten 18 und 19 der beiden Seitenwände 2 und 3 angedrückt. Außerdem wird der Deckel 6 zugeklappt, so daß er die in der Figur 2 dargestellte Lage einnimmt. In dieser Lage wird der Hebel 25 unter Betätigung der Kolbenzylindereinheit 23 verschwenkt. bis die Ausnehmung 26 gegen den Stift 27 anläuft. Um das Anklappen der Frontklappe 5 zu sichern, ist der schwenkbare Haken 28 vorgesehen, der an der Frontklappe 5 angelenkt ist. Der Haken 28 setzt sich hinter den Stift 29, der an den Seitenwänden 2 und 3 befestigt ist. Dementsprechend sind zwei solcher Haken zu beiden Seiten der Seitenwände 2 und 3 angeordnet. Der Haken 28 dient dazu, beim Schließen der Vorrichtung die Frontklappe 5 zunächst in ihrer angeklappten Lage zu halten, bis dann über die Wirkung der Kolbenzylindereinheit 23 die Frontklappe 5 fest an die Stirnseiten 18 und 19 der beiden Seitenwände 2 und 3 herangezogen wird. Vor dem Anklappen der Frontklappe 4 war die untere Einzugswalze 11 wieder in die Vorrichtung eingesetzt worden, wozu die beiden Lager 13 und 14 in die Langlöcher 15 eingeschoben worden waren. Bei dem endgültigen Anziehen der Frontklappe 5 mittels der Kolbenzylindereinheit 23 werden dann die Lager 13 und 14 über die Vorsprünge 20 und die Stützteile 21 in ihre jeweilige Arretierung gedrückt, womit die Vorrichtung wieder in ihre Betriebslage gebracht ist.

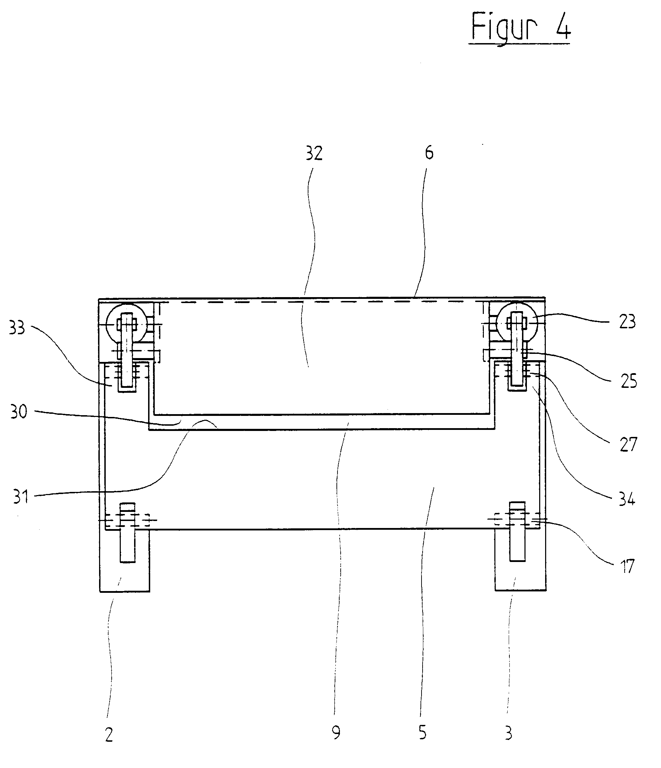

Figur 4 zeigt eine Frontansicht der Granuliervorrichtung in der Betriebslage, d.h. bei geschlossenem Deckel 6 und angedrückter Frontklappe 5. Die Figur 4 läßt deutlich den Schlitz 9 erkennen, durch den die Zuführung der Stränge in die Granuliervorrichtung erfolgt. Der Schlitz wird an seinen Längsseiten durch die Stirnseiten 30 und 31 des Deckels 6 und der Frontklappe 5 begrenzt. Der Deckel 6 ragt dazu mit der heruntergezogenen Schürze 32 in Richtung auf den Schlitz 9 zu und wird seitlich von den Verlängerungen 31 und 34 der Frontklappe 5 begrenzt. Die Frontklappe ist auf den Drehachsen 17 gelagert. Figur 4 zeigt weiterhin die Kolbenzylindereinheit 23, die den Hebel 25 in der oben beschriebenen Weise betätigt. In der Figur 4 ist der im Zusammenhang mit der Figur 3 beschriebene Haken 28 und der Stift 29 weggelassen.

## Patentansprüche

1. Granuliervorrichtung für Strangmaterialien mit einer Einzugsvorrichtung zur Erfassung des Strangmaterials und dessen Förderung zu einem Gegenmesser (8) einer mit dem Gegenmesser (8) zusammenwirkenden Messerwalze (7) zum Zerschneiden des Strangmaterials zu Granulat und mit einer die Einzugsvorrichtung bildenden unteren und oberen Einzugswalze (11, 10), von denen mindestens eine antreibbar ist, wobei die Walzen (7, 10, 11) in zwei gegenüberliegenden Seitenwänden (2, 3) eines die Granuliervorrichtung einschließenden Gehäuses (1) gelagert sind, das an seiner Frontseite eine wegklappbare Frontklappe (5) aufweist. **dadurch gekennzeichnet**, daß die beiden Seitenwände (2, 3) jeweils ein sich in Richtung zur Frontklappe (5) öffnendes Langloch (15) zur Führung von Lagern (13, 14) der unteren Einzugswalze (11) aufweisen, dessen Ende (16) eine die Betriebsstellung der unteren Einzugswalze (11) definierende Arretierung bildet, wobei die Frontklappe (5) in ihrer im Betrieb geschlossenen Lage über ein Stützteil (21) die Lager (13, 14) der unteren Einzugswalze (11) gegen die Arretierung drückt.

2. Granuliervorrichtung nach Anspruch 1, **dadurch gekennzeichnet**, daß die Frontklappe (5) zusammen mit einem die Frontseite der Granuliervorrichtung teilweise übergreifenden Deckel (6) den Abschluß der Frontseite bildet und mittels einer an dem Deckel (6) angelenkten Zugvorrichtung (23, 24) gegen die Stirnseiten (18, 19) der Seitenwände (2, 3) andrückbar ist.

3. Granuliervorrichtung nach Anspruch 1 oder 2, **dadurch gekennzeichnet**, daß das Langloch (15) im wesentlichen horizontal verläuft.

## Claims

1. Granulating device for strand materials with a drawing-in device for gripping the strand material and transporting it to a stationary knife (8) of a knife roll (7), cooperating with the stationary knife (8), for cutting up the strand material into granulate and with a lower and an upper drawing-in roll (11, 10), forming the drawing-in device, of which rolls (11, 10) at least one is driveable, the rolls (7, 10, 11) being held in two opposite side walls (2, 3) of a housing (1) enclosing the granulating device, said housing (1) comprising a hinged front flap (5) on its front side, **characterized in that** the two side walls (2, 3) each comprise an oblong hole (15), open towards the front flap (5), for the guiding of bearings (13, 14) of the lower drawing-in roll (11), the end (16) of said oblong hole (15) forming a stop that defines the operating position of the lower drawing-in roll (11), the front flap (5) - when in its closed operating position - pressing the bearings (13, 14) of the lower drawing-in roll (11) against the stop through the intermediary of a supporting part (21).

2. Granulating device according to claim 1, **characterized in that** the front flap (5), together with a cover (6) partially covering the front side of the granulating device, forms the termination of the front side and, by means of a pulling device (23, 24) articulatedly connected to the cover (6), is adapted to be pressed against the end faces (18, 19) of the side walls (2, 3).

3. Granulating device according to claim 1 or 2, **characterized in that** the oblong hole (15) extends more or less horizontally.

## Revendications

1. Dispositif de granulation pour des matériaux en forme de barres comportant un dispositif d'alimentation servant à saisir le matériau en forme de barre et l'entraîner en direction d'un couteau antagoniste (8) d'un cylindre porte-couteaux (7) qui coopère avec un couteau antagoniste (8), pour sectionner le matériau en forme de barre de manière a former des granulés, et comportant des cylindres d'alimentation inférieur et supérieur (11, 10) qui forment le dispositif d'alimentation et dont l'un au moins peut être entraîné, les cylindres (7, 10, 11) étant tourillonnés dans deux parois latérales opposées (2, 3) d'un carter (1) qui enserre le dispositif de granulation et comporte, sur son côté avant, un volet avant pouvant être écarté par rabattement (5), caractérisé en ce que les deux parois latérales (2, 3) possèdent chacune un trou allongé (15), qui s'ouvre en direction du volet avant (5) et sert à guider des paliers (13, 14) du cylindre inférieur d'alimentation (11) et dont l'extrémité (16) forme un dispositif d'arrêt définissant la position de fonctionnement du cylindre inférieur d'alimentation (11), auquel cas, lorsqu'il est dans sa position fermée en fonctionnement, le volet avant (5) repousse, au moyen d'un élément d'appui (21), les paliers (13, 14) du cylindre inférieur d'alimentation (11) contre le dispositif d'arrêt.

2. Dispositif de granulation selon la revendication 1, caractérisé en ce que le volet avant (5) forme, conjointement avec un couvercle (6), qui s'engage partiellement par-dessus le côté avant du dispositif de granulation, l'ensemble de fermeture du côté avant et peut être repoussé, au moyen d'un dispositif de traction (23, 24) articulé sur le couvercle (6), contre les faces frontales (18, 19) des parois latérales (2, 3).

3. Dispositif de granulation selon la revendication 1 ou 2, caractérisé en ce que le trou allongé (15) est sensiblement horizontal.
